# EUROPÄISCHE PATENTSCHRIFT

(11) **EP 1 290 971 B1**
(45) Veröffentlichungstag und Bekanntmachung des Hinweises auf die Patenterteilung: **05.03.2008**
(21) Anmeldenummer: 02018129.3
(22) Anmeldetag: 14.08.2002
(51) Int. Cl.: A47L 9/20, A47L 11/40, A47L 11/24

(54) **Verfahren zum Reinigen des Filters einer fahrbaren Bodenreinigungsmaschine**
Method of cleaning the filter of a travelling floor cleaning machine
Procédé pour nettoyer le filtre d'une machine mobile de nettoyage des sols

(30) Priorität: 07.09.2001 DE 10143941
(43) Veröffentlichungstag der Anmeldung: 12.03.2003
(60) Teilanmeldung: 07004158.7
(73) Patentinhaber: Hako-Werke GMBH, D-23843 Bad Oldesloe (DE)
(72) Erfinder: Protz, Carsten, 24743 Grömitz (DE)
(74) Vertreter: UEXKÜLL & STOLBERG

(56) Entgegenhaltungen:
- EP-A- 0 860 554
- GB-A- 1 224 068
- US-A- 4 173 052
- US-A- 5 771 532

## Beschreibung

Die Erfindung bezieht sich auf ein Verfahren zum Reinigen des Filters eines Saugsystems einer fahrbaren Bodenreinigungsmaschine durch Unterbrechen des Bodenreinigungsbetriebs und Zufuhr von mechanischer Schwingungsenergie zum Halterahmen des Filters, der ein fest, jedoch lösbar mit dem Halterahmen verbundenes Trägerteil und eine an diesem befestigte, das Filtermaterial aufweisende Filteranordnung enthält, wobei die Schwingungsenergie die Resonanzfrequenz der Filteranordnung aufweist.

Fahrbare Bodenreinigungsmaschinen mit Saugsystemen gibt es in unterschiedlichen Ausführungen und sowohl als Aufsitzermaschinen als auch als handgeführte Maschinen. Bei sogenannten Kehrsaugmaschinen wirft eine Kehrbürste oder -walze vom Boden aufgenommenen Schmutz in einen Schmutzsammelbehälter, und die mit dem von der Kehrbürste oder -walze aufgewirbelten Feinstaub belastete Luft wird durch mindestens einen Filter gesaugt, bevor sie wieder in die umgebende Luft geleitet wird, um so von Schmutzbestandteilen befreit zu werden. Bei sogenannten Straßenkehrmaschinen wird der Schmutz durch einen vom Saugsystem erzeugten Luftstrom vom Boden aufgenommen und in einen Schmutzsammelbehälter befördert, worauf auch hier in einzelnen Fällen eine Reinigung der Luft mittels mindestens eines Filters erfolgt, bevor die Luft wieder in die Umgebung gelangt. Die in allen Fällen erfolgende Ablagerung von Schmutzbestandteilen am Material des Filters oder der Filter führt allmählich zu einer Reduzierung der Durchlässigkeit des Filters. Es ist daher erforderlich, den Kehrsaugbetrieb bzw. Saugbetrieb, d.h. den Bodenreinigungsbetrieb zeitweise zu unterbrechen, um eine Reinigung des Filters vorzunehmen. Diese Reinigung kann durch mechanische Abstreifer erfolgen, die über das Filtermaterial, etwa die durch ziehharmonikaförmige Faltung gebildeten Lamellen eines Plattenfilters bzw. eines Patronenfilters, geführt werden. Es ist ferner bekannt, eine Reinigung dadurch durchzuführen, dass man dem Halterahmen des Filters mechanische Schwingungsenergie zuführt, etwa indem man ihn mit einem Rüttelmotor, also einem Motor koppelt, an dessen Motorwelle sich beispielsweise eine exzentrisch befestigte Masse befindet. Derartige Rüttelmotoren werden sowohl bei Plattenfiltern als auch bei Schlauchfiltern u.a. eingesetzt, und es ist bereits bekannt (GB-B-1 224 068), das Rütteln mit der Resonanzfrequenz der Filteranordnung vorzunehmen. Dabei wird die Resonanzfrequenz entweder entsprechend dem Aufbau der Filteranordnung fest eingestellt oder im Betrieb angepasst.

Während das Reinigen mittels in Eingriff mit dem Filtermaterial kommender Abstreifer nur begrenzt wirksam ist und insbesondere zu Verschleiss im Bereich des Filtermaterials und damit zum lokalen Verlust der Filterwirkung führen kann, ist der Einsatz von Rüttelmotoren weniger schädlich für die Struktur des Filtermaterials, hat jedoch nur begrenzte Wirkung, da die am Filtermaterial haftenden Schmutzteilchen auf diese Weise nur recht unvollkommen gelöst werden, es sei denn, der Filterreinigungsvorgang verläuft über eine sehr lange Zeit. Dies hat jedoch dann eine entsprechend lange Unterbrechung des eigentlichen Bodenreinigungsbetriebs der Bodenreinigungsmaschine zur Folge. Das bekannte Rütteln mit der Resonanzfrequenz der Filteranordnung könnte zwar den Nachteil eines langen Reinigungsvorgangs beseitigen, ist jedoch in der Praxis deutlich weniger effektiv. Dies hat seine Ursachen darin, dass die wirksame Resonanzfrequenz der Filteranordnung von zahlreichen Faktoren abhängt, die einerseits fertigungsbedingt sind (Schwankungen in der Zusammensetzung des Filtermaterials, Toleranzen der Halterahmenbauteile, Toleranzen der Schwingungserzeuger) und die andererseits im Betrieb der Bodenreinigungsmaschine auftreten. Bei Letzterem handelt es sich insbesondere um die in der Filteranordnung enthaltene Schmutzmenge. Bei entsprechend dem Filteraufbau fest eingestellter "Resonanzfrequenz" wird diese nur in den seltensten Fällen mit der beim jeweiligen Reinigungsfall gegebenen Resonanzfrequenz der Filteranordnung übereinstimmen. Da aber die jeweils tatsächlich vorhandene Resonanzfrequenz nicht gemessen werden kann, kann auch eine Frequenzeinstellung für den einzelnen Reinigungsvorgang nur durch Versuche erfolgen. Dies ist wiederum so zeitaufwendig, dass man eigentlich auf den Versuch des Rüttelns mit Resonanzfrequenz gleich verzichten kann.

Es ist Aufgabe der Erfindung, das durch Zufuhr von mechanischer Schwingungsenergie zum Halterahmen erfolgende Reinigen des Filters einer Bodenreinigungsmaschine so zu verbessern, dass in verhältnismäßig kurzer Zeit ein äusserst wirksames Ablösen des am Filtermaterial anhaftenden Schmutzes bewirkt wird.

Zur Lösung dieser Aufgabe wird ein Verfahren der eingangs erwähnten Art erfindungsgemäß derart ausgestaltet, dass dem gegenüber seiner Halterung schwingungsisolierten, begrenzt beweggbaren Halterahmen Schwingungsenergie mit einer Frequenz zugeführt wird, die während eines Reinigungsvorgangs mindestens viermal einen Frequenzbereich durchläuft, in dem die Resonanzfrequenz der am Trägerteil befestigten Filteranordnung liegt. Entsprechend wird eine fahrbare Bodenreinigungsmaschine des interessierenden Typs erfindungsgemäß dadurch ausgestaltet, dass der Halterahmen elastisch abgestützt und begrenzt bewegbar gehalten ist und vom Schwingungserzeuger mit Schwingungsenergie einer Frequenz beaufschlagt wird, die während eines Reinigungsvorgangs mindestens viermal einen Frequenzbereich durchläuft, in dem die Resonanzfrequenz der Filteranordnung liegt.

Bei der erfindungsgemäßen Lösung wird somit die bekannte "theoretische" Resonanzfrequenz der Filteranordnung zugrundegelegt, jedoch berücksichtigt, dass diese in der Praxis nicht die für den jeweiligen Reinigungsvorgang geltende "tatsächliche" Resonanzfrequenz ist, die beispielsweise von Fertigungstoleranzen und auch vom Grad der Schmutzbeladung der Filteranordnung abhängt. Durch das Durchlaufen eines Frequenzbereichs, der nicht nur die "theoretische", sondern auch die "tatsächliche" Resonanzfrequenz enthält, wird sichergestellt, dass der Halterahmen des Filters und damit der Filter derart mit Schwingungsenergie beaufschlagt wird, dass seine Filteranordnung, die das Filtermaterial enthält, zumindest viermal, vorzugsweise sechsmal bis zehnmal, mit ihrer jeweiligen "tatsächlichen" Resonanzfrequenz erregt wird. Dies führt zu einer maximalen Auslenkung des Filtermaterials in beide Richtungen der Schwingungsbewegung und damit insbesondere zu einer starken Beschleunigung der Schmutzablagerungen auf dem Filtermaterial bei der Umkehr der Bewegungsrichtung des Filtermaterials, was eine besonders gute Ablösung der Schmutzteilchen vom Filtermaterial zur Folge hat. Durch dieses mehrfache Erregen mit der Resonanzfrequenz ergibt sich daher in verhältnismäßig kurzer Zeit eine weit bessere Ablösung von Schmutzablagerungen vom Filtermaterial als dies möglich ist, wenn der Filter mit Hilfe eines Rüttelmotors mit einer allein durch die Drehzahl des Rüttelmotors bestimmten, im Wesentlichen konstanten, jedoch nur in der Nähe der "tatsächlichen" Resonanzfrequenz liegenden Frequenz beaufschlagt wird.

Der zu durchlaufende Frequenzbereich muss einerseits ausreichend groß gewählt werden, so dass die "tatsächliche" Resonanzfrequenz auch in diesem liegt, und andererseits soll er möglichst klein sein, damit bei dem gewünschten langsamen Durchlaufen des Frequenzbereichs und der dadurch gegebenen verhältnismäßig langen Erregung mit der Resonanzfrequenz die zeitlichen Abstände zwischen dem aufeinanderfolgenden Durchlaufen der "tatsächlichen" Resonanzfrequenz möglichst kurz sind, der gesamte Reinigungsvorgang also verhältnismäßig wenig Zeit erfordert. In bevorzugter Ausgestaltung ist daher die obere Grenzfrequenz des Frequenzbereichs maximal um 30 % größer als die "theoretische" Resonanzfrequenz, vorzugsweise maximal um 20 % und in ganz besonders bevorzugter Weise maximal um 10 %. Entsprechend ist auch die untere Grenzfrequenz des Frequenzbereichs maximal um 30 % kleiner als die "theoretische" Resonanzfrequenz und vorzugsweise maximal um 20 % und ganz besonders bevorzugt maximal um 10 %. Die hierbei zugrundegelegte "theoretische" Resonanzfrequenz ist, wie bereits erwähnt, die für die Filteranordnung eines Filters der interessierenden Bauart anzunehmende Resonanzfrequenz, also ein Mittelwert, der weder Abweichungen infolge Toleranzen des Filtermaterials und des übrigen Aufbaus noch Änderungen der Resonanzfrequenz durch Ablagerung von Schmutzteilchen berücksichtigt.

Wenn die Bodenreinigungsmaschine einen Plattenfilter enthält, der in einem rechteckigen oder quadratischen Halterahmen angeordnet ist, der, wie vorstehend bereits erwähnt, elastisch abgestützt und begrenzt bewegbar gehalten ist, erfolgt vorzugsweise die Beaufschlagung mit Schwingungsenergie so, dass die am Trägerteil gehalterte, aus lamellenförmigem Filtermaterial bestehende Filteranordnung in der Plattenebene und in Richtung senkrecht zur Längserstreckung der Lamellen in Schwingungen versetzt wird.

Wenn die Bodenreinigungsmaschine Schlauchfilter enthält, die ein zylindrisches Trägerteil und eine Filteranordnung aus schlauchförmigem Filtermaterial und einem elastischen Filterkorb ggf. mit einer das Schwingungsverhalten verbessernden, zusätzlichen Masse aufweisen, können diese entweder in Richtung ihrerer Längsachse oder in Richtung quer zu ihrer Längsachse in Schwingungen versetzt werden.

Die Erfindung wird im Folgenden anhand der Ausführungsbeispiele zeigenden Figuren näher erläutert.
- Figur 1: zeigt in einer Seitenansicht eine Bodenreinigungsmaschine in Form einer üblichen Kehrsaugmaschine, in der die Erfindung eingesetzt werden kann.
- Figur 2: zeigt schematisch die Halterung eines Plattenfilters in einem Filtergehäuse einer fahrbaren Bodenreinigungsmaschine.
- Figur 3: zeigt schematisch einen Schlauchfilter einer fahrbaren Bodenreinigungsmaschine, der an einer Halteplatte angebracht ist.
- Figur 4: zeigt in einer Darstellung entsprechend Figur 3 einen in Richtung seiner Längsachse mit Schwingungsenergie beaufschlagten Schlauchfilter.
- Figur 5: zeigt in einer Darstellung entsprechend Figur 3 einen quer zu seiner Längsachse mit Schwingungsenergie beaufschlagten Schlauchfilter.

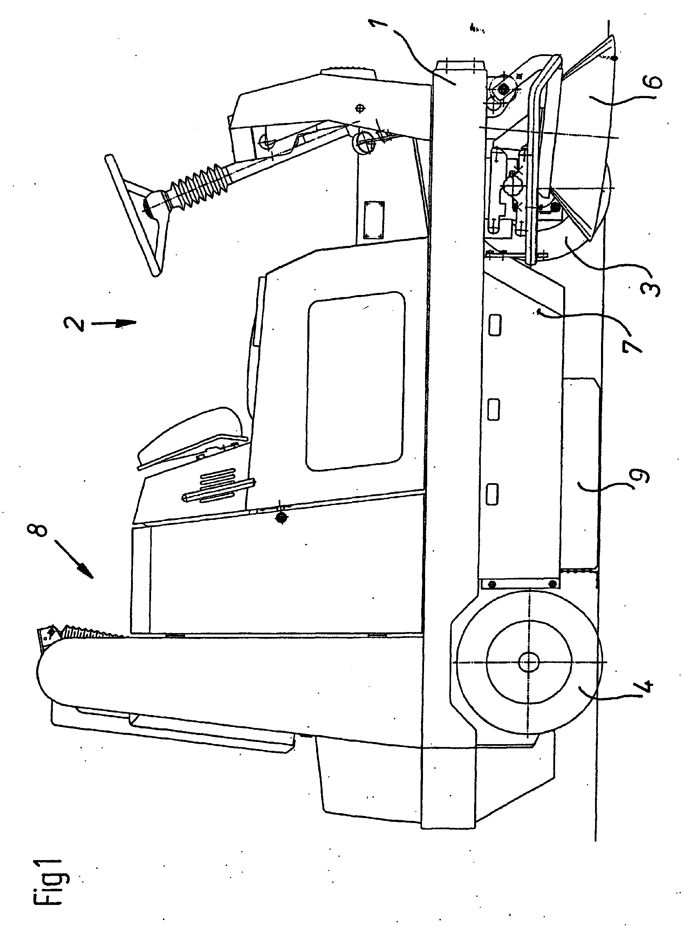

Die in Figur 1 schematisch dargestellte Kehrsaugmaschine hat einen Rahmen 1, an dem ein vorderes Rad 3 und hintere Räder 4 gehaltert sind und auf dem ein Bedienungsbereich 2 vorgesehen ist, der einen Fahrersitz, ein an einer Lenksäule befestigtes Steuerrad sowie die entsprechenden Bedienungselemente für den Betrieb der Kehrsaugmaschine aufweist. Unterhalb des Fahrersitzes sind üblicherweise die für die Energieversorgung benötigten Batterien oder ein Verbrennungsmotor untergebracht. Auf dem hinteren Teils des Rahmens 1 sind im Bereich 8 die für den Fahrbetrieb und den Saugbetrieb erforderlichen Aggregate, insbesondere ein Gebläse und die notwendigen Luftführungen vorgesehen, und in diesem Bereich befindet sich auch ein Schmutzaufnahmebehälter einschließlich des oder der zugehörigen Filter. Unterhalb des Rahmens 1 sitzt im vorderen Bereich ein im Reinigungsbetrieb in Eingriff mit dem zu reinigenden Boden stehender, sich drehend bewegender Seitenbesen 6 zum Zuführen des auf dem Boden befindlichen Schmutzes zur Mitte und vor eine drehend angetriebene, in Figur 1 von einer Abdeckung 9 verdeckte Kehrwalze, die den Schmutz durch eine Ansaugführung 7 in den Schmutzaufnahmebehälter wirft.

Der Aufbau und die Funktionsweise einer solchen Kehrsaugmaschine ist allgemein bekannt und bedarf daher keiner weiteren Erläuterung.

Wie bereits erwähnt, wird die den aufgewirbelten Feinstaub mitnehmende Luft vor ihrem Austritt in die Umgebung durch mindestens einen Filter geleitet, um an diesem mitgerissene Schmutzteilchen abzulagern, so dass diese nicht wieder in die Umgebungsluft gelangen. Zu diesem Zweck können in derartigen Kehrsaugmaschinen Plattenfilter, Schlauchfilter, Patronenfilter o.ä. vorgesehen sein, und es ist möglich, entweder einen einzigen Filter zu verwenden oder mehrere Filter im Strömungsverlauf hintereinander anzuordnen. Der sich auf dem Filtermaterial dieser Filter ablagernde Schmutz reduziert selbstverständlich dessen Luftdurchlässigkeit, so dass es erforderlich ist, von Zeit zu Zeit eine Filterreinigung vorzunehmen, durch die die anhaftenden Schmutzteilchen bzw. der anhaftende, aus Schmutzteilchen zusammengesetzte Filterkuchen vom Filtermaterial gelöst wird.

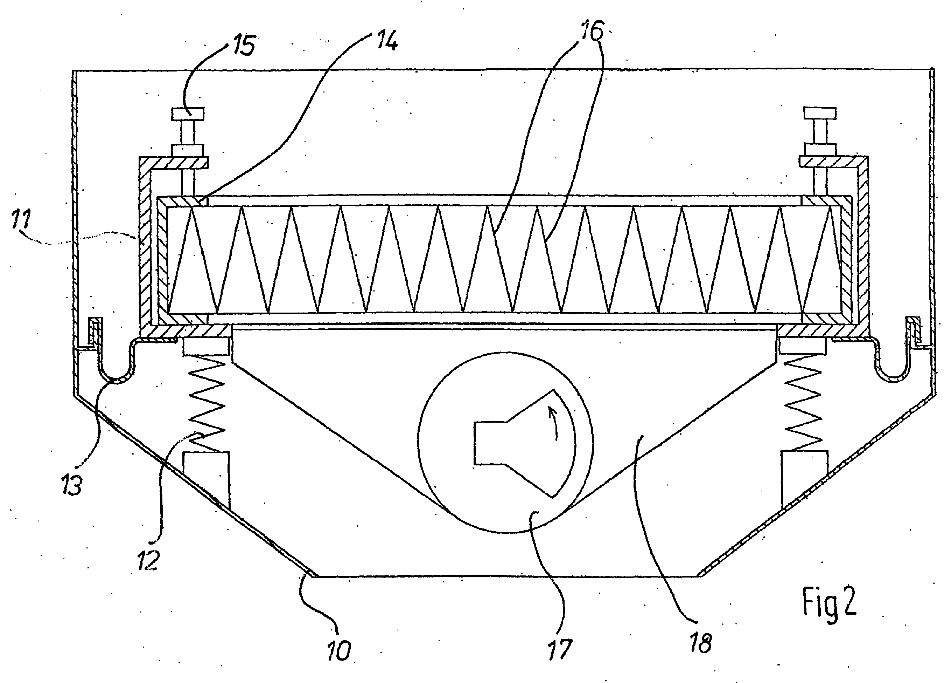

In der schematischen Darstellung gemäß Figur 2 ist ein Filtergehäuse 10 einer Kehrsaugmaschine gezeigt, das im Betrieb von unten nach oben von mit Schmutz beladener Luft durchströmt wird. In dem Filtergehäuse 10 ist ein Halterahmen 11 angeordnet, der sich auf elastischen Stützen 12 am Filtergehäuse 10 abstützt. Diese Stützen können durch Schraubenfedern gebildet sein, in die sich am Halterahmen 11 befestigte Dorne erstrecken, die die Lage des Halterahmens 11 im Filtergehäuse 10 festlegen. Der Halterahmen 11 ist ansonsten unter Freilassung eines Spalts im Filtergehäuse 10 angeordnet, und dieser Spalt ist durch eine umlaufende elastische Dichtung 13 abgedichtet, die den Durchtritt von ungefilteter Luft in diesem Bereich verhindert.

An der Unterseite des Halterahmens 11 erstreckt sich eine Traverse 17, an der ein schematisch dargestellter Rüttelmotor 18 gehalten ist. Hierbei handelt es sich um einen Elektromotor, der auf seiner Ankerwelle eine exzentrische Masse trägt. Derartige Rüttelmotoren sind bekannt. Gegebenenfalls kann zum drehenden Antreiben einer eine exzentrische Masse tragenden Welle auch ein durch Magnetwechselfeld bewegbarer Kolben, ein pneumatischer oder hydraulischer Arbeitszylinder o.ä. dienen.

Im Halterahmen 11 sitzt lösbar ein Plattenfilter, dessen rahmenförmiges Trägerteil 14 mittels einer Einspannung 15 festgesetzt ist und dessen im Trägerteil 14 gehalterte Filteranordnung aus durch ziehharmonikaartige Faltung von Filtermaterial gebildeten Lamellen 16 dazu dient, den von der hindurchtretenden Luft mitgeführten Schmutz zurückzuhalten. Daher lagert sich im Kehrsaugbetrieb an diesen Lamellen Schmutz ab, der die Luftdurchlässigkeit des Filtermaterials zunehmend verringert.

Ist ein gewisser Grad der Luftundurchlässigkeit erreicht, unterbricht die Bedienungsperson der Kehrsaugmaschine den Bodenreinigungsbetrieb und leitet einen Filterreinigungsvorgang ein. Hierzu wird der Rüttelmotor 18 aktiviert, so dass er durch seine Drehung Schwingungsenergie auf den Halterahmen 11 überträgt. Die Schwingungsenergie wirkt in der Zeichenebene gemäß Figur 2, so dass der Halterahmen 11 und damit der Plattenfilter in der Zeichenebene hin- und herbewegt werden. Der Elektromotor 18 wird dabei so gesteuert, dass er mehrfach, und zwar mindestens viermal, vorzugsweise sechsmal bis zehnmal, einen Drehzahlbereich durchläuft, der derart gewählt ist, dass bei seinem Durchlaufen eine Erregung der Filteranordnung mit ihrer Resonanzfrequenz stattfindet. Bei diesem Durchlaufen der Resonanzfrequenz erhöht sich die Vibrationsamplitude der Filterlamellen 16 erheblich gegenüber einer Erregung außerhalb der Resonanzfrequenz. Die deutlich erhöhten Auslenkungen der Filterlamellen 16 im Bereich der Resonanzfrequenz führen zu einem wirksamen Ablösen der Schmutzablagerungen.

Bei einem praktischen Versuch wurde der Rüttelmotor mehrfach mit Drehzahlen von 4000 U/min bis 5000 U/min und umgekehrt betrieben, um einen Plattenfilter, bei dem die Resonanzfrequenz der Filteranordnung bei etwa 75 Hz lag, im Bereich dieser Resonanzfrequenz zu erregen. Dabei erhöhten sich die Auslenkungen der Filterlamellen, die bei einer Beaufschlagung mit Schwingungsenergie außerhalb der Resonanzfrequenz eine Auslenkung von etwa ±2 mm erfuhren, auf eine Auslenkung von etwa ±6 mm bis ±7 mm, was eine ausgeprägte Erhöhung der Reinigungswirkung zur Folge hatte.

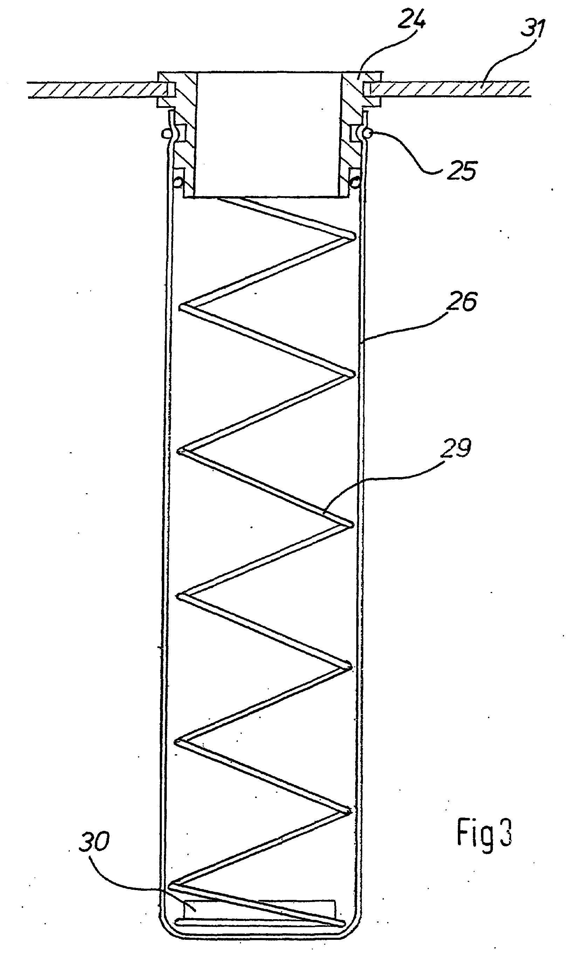

In Figur 3 ist schematisch ein Schlauchfilter gezeigt, der mit seinem am oberen Ende vorgesehenen zylindrischen Trägerteil oder Kopfstück 24 an einer Halteplatte 31 befestigt ist, deren Funktion derjenigen des Halterahmens 11 aus Figur 2 entspricht. Am Trägerteil 24 ist eine Filteranordnung aus schlauchförmigem Filtermaterial 26 und von diesem umschlossenen, elastisch verformbaren Filterkorb 29 mit am unteren Ende angebrachter Zusatzmasse 30 befestigt.

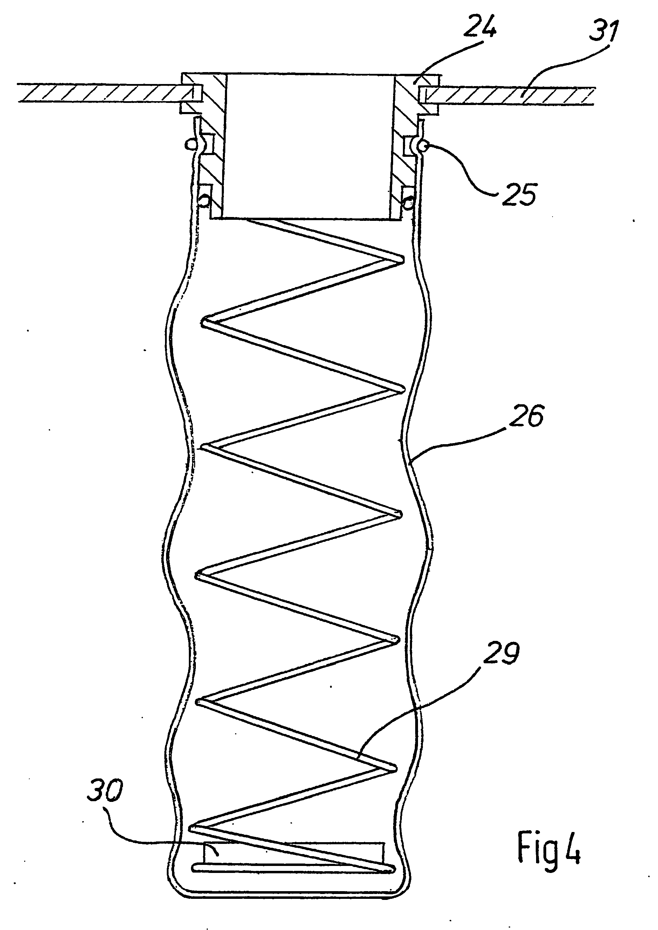

Zur Durchführung eines Filterreinigungsvorgangs wird, wie in Figur 4 angedeutet, die Halteplatte 31 und damit das Trägerteil 24 mit Schwingungsenergie in Richtung der Längsachse des Schlauchfilters beaufschlagt. Dadurch ergibt sich, wie in Figur 4 erkennbar, ein wechselndes Verkürzen und Strecken des die Zusatzmasse 30 tragenden Filterkorbs 29 und des schlauchförmigen Filtermaterials 26 und damit eine entsprechende Verformung von dessen Umfangswand, die dann besonders ausgeprägt ist, wenn die zugeführte Schwingungsenergie im Bereich der Resonanzfrequenz der Filteranordnung liegt. Die dadurch auftretende sehr ausgeprägte Verformung fördert den Reinigungsvorgang in erheblichem Maße.

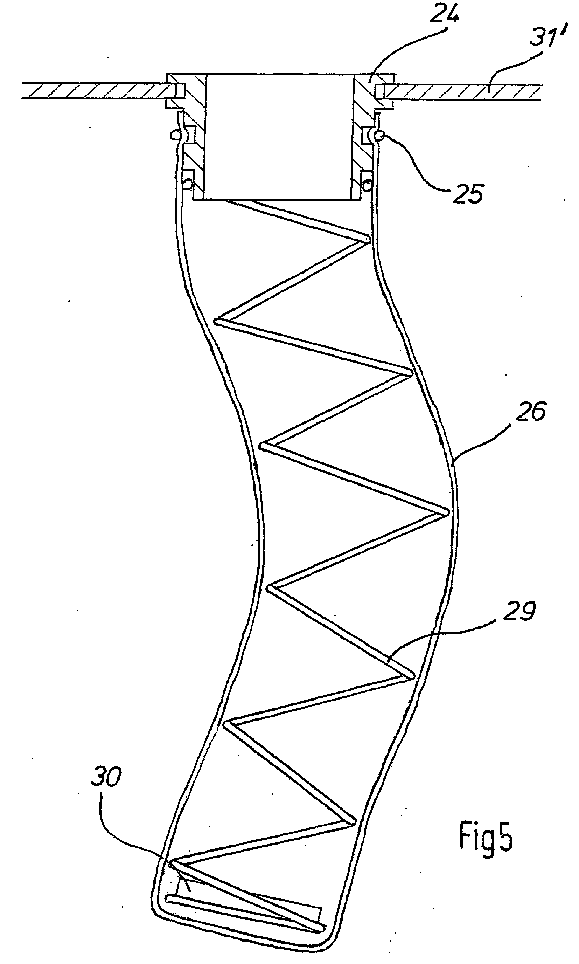

Ein Schlauchfilter entsprechend Figur 4 kann, wie in Figur 5 angedeutet, mit seinem Trägerteil oder Kopfstück 24 auch an einer Halteplatte 31' gehaltert sein, die zur Übertragung von Schwingungsenergie quer zur Längsachse des Schlauchfilters geeignet aufgehängt ist. Bei einer derartigen Zufuhr von Schwingungsenergie führt die Filteranordnung, wie in Figur 5 angedeutet, Biegeschwingungen aus, die selbstverständlich dann besonders ausgeprägt sind, wenn Schwingungsenergie im Bereich der Resonanzfrequenz der Filteranordnung zugeführt wird. Auch hier ergibt sich eine ausgeprägte Reinigungswirkung.

## Patentansprüche

1. Verfahren zum Reinigen des Filters eines Saugsystems einer fahrbaren Bodenreinigungsmaschine durch Unterbrechen des Bodenreinigungsbetriebs und Zufuhr von mechanischer Schwingungsenergie zum Halterahmen (11; 31; 31') des Filters, der ein fest, jedoch lösbar mit dem Halterahmen (11; 31; 31') verbundenes Trägerteil (14; 24) und eine an diesem befestigte, das Filtermaterial aufweisende Filteranordnung (16; 26, 29, 30) enthält, wobei die Schwingungsenergie die Resonanzfrequenz der Filteranordnung aufweist, **dadurch gekennzeichnet, dass** dem gegenüber seiner Halterung schwingungsisolierten, begrenzt bewegbaren Halterahmen (11; 31; 31') Schwingungsenergie mit einer Frequenz zugeführt wird, die während eines Filterreinigungsvorgangs mindestens viermal einen Frequenzbereich durchläuft, in dem die Resonanzfrequenz der Filteranordnung (16; 26, 29, 30) liegt.

2. Verfahren nach Anspruch 1, **dadurch gekennzeichnet, dass** die obere Grenzfrequenz des Frequenzbereichs maximal um 30 % größer als die Resonanzfrequenz ist.

3. Verfahren nach Anspruch 2, **dadurch gekennzeichnet, dass** die obere Grenzfrequenz des Frequenzbereichs maximal um 20 %, vorzugsweise maximal um 10 % größer als die Resonanzfrequenz ist.

4. Verfahren nach einem der Ansprüche 1 bis 3, **dadurch gekennzeichnet, dass** die untere Grenzfrequenz des Frequenzbereichs maximal um 30 % kleiner als die Resonanzfrequenz ist.

5. Verfahren nach Anspruch 4, **dadurch gekennzeichnet, dass** die untere Grenzfrequenz maximal um 20 %, vorzugsweise maximal um 10 % kleiner als die Resonanzfrequenz ist.

6. Verfahren nach einem der Ansprüche 1 bis 5 zum Reinigen eines Plattenfilters, **dadurch gekennzeichnet, dass** der Plattenfilter in der Plattenebene und in Richtung senkrecht zur Längserstreckung der Lamellen der Filteranordnung (16) in Schwingungen versetzt wird:

7. Verfahren nach einem der Ansprüche 1 bis 5 zum Reinigen eines Schlauchfilters, **dadurch gekennzeichnet, dass** der Schlauchfilter in Richtung seiner Längsachse in Schwingungen versetzt wird.

8. Verfahren nach einem der Ansprüche 1 bis 5 zum Reinigen eines Schlauchfilters, **dadurch gekennzeichnet, dass** der Schlauchfilter in Richtung quer zu seiner Längsachse in Schwingungen versetzt wird.

## Claims

1. A method for cleaning the filter of a suction system of a travelling floor cleaning machine by interrupting the floor cleaning operation and supplying mechanical vibrational energy to the supporting frame (11; 31; 31') of the filter, which contains a support part (14; 24) connected securely but detachably to the supporting frame (11; 31; 31') and a filter arrangement (16; 26, 29, 30) secured to the latter comprising the filter material, wherein the vibrational energy has the resonance frequency of the filter arrangement, **characterised in that** vibrational energy is supplied to the supporting frame (11; 31; 31'), which can be moved within limits and is vibrationally-insulated from its mount, at a frequency, which during a filter cleaning procedure passes at least four times through a frequency range in which the resonance frequency of the filter arrangement (16; 26, 29, 30) lies.

2. The method according to claim 1, **characterised in that** the upper limit of the frequency range is at most 30 % greater than the resonance frequency.

3. The method according to claim 2, **characterised in that** the upper limit of the frequency range is at most 20 %, preferably at most 10 % greater than the resonance frequency.

4. The method according to one of claims 1 to 3, **characterised in that** the lower limit of the frequency range is at most 30 % less than the resonance frequency.

5. The method according to claim 4, **characterised in that** the lower limit of the frequency range is at most 20 % less, preferably at most 10 % less than the resonance frequency.

6. The method according to one of claims 1 to 5 for cleaning a plate filter, **characterised in that** the plate filter is set to vibrate in the plate plane and in a direction perpendicular to the longitudinal extension of the lamellae of the filter arrangement (16).

7. The method according to one of claims 1 to 5 for cleaning a hose filter, **characterised in that** the hose filter is set to vibrate in the direction of its longitudinal axis.

8. The method according to one of claims 1 to 5 for cleaning a hose filter, **characterised in that** the hose filter is set to vibrate in a direction perpendicular to its longitudinal axis.

## Revendications

1. Procédé pour nettoyer le filtre d'un système d'aspiration d'une machine roulante de nettoyage du sol par interruption du mode nettoyage du sol et amenée d'une énergie mécanique d'oscillation au cadre de maintien (11 ; 31 ; 31') du filtre, qui contient une partie portante (14 ; 24) reliée de manière fixe mais séparable au cadre de maintien (11 ; 31 ; 31'), et un agencement filtrant (16 ; 26, 29, 30) fixé à celle-ci et comportant le matériau filtrant, l'énergie d'oscillation présentant la fréquence de résonance de l'agencement filtrant, **caractérisé en ce qu'**au cadre de maintien (11 ; 31 ; 31') isolé par rapport aux oscillations de sa fixation et déplaçable dans une mesure limitée, est amenée une énergie d'oscillation à une fréquence qui, pendant une opération de nettoyage du filtre, traverse au moins quatre fois une plage de fréquence dans, laquelle se situe la fréquence de résonance de l'agencement filtrant (16 ; 26, 29, 30).

2. Procédé selon la revendication 1, **caractérisé en ce que** la fréquence limite supérieure de la plage de fréquence est au maximum supérieure de 30 % à la fréquence de résonance.

3. Procédé selon la revendication 2, **caractérisé en ce que** la fréquence limite supérieure de la plage de résonance est au maximum supérieure de 20 %, de préférence au maximum de 10 % à la fréquence de résonance.

4. Procédé selon l'une quelconque des revendications 1 à 3, **caractérisé en ce que** la fréquence limite inférieure de la plage de fréquence est au maximum inférieure de 30 % à la fréquence de résonance.

5. Procédé selon la revendication 4, **caractérisé en ce que** la fréquence limite inférieure est au maximum inférieure de 20 %, de préférence au maximum de 10 % à la fréquence de résonance.

6. Procédé selon l'une quelconque des revendications 1 à 5 pour nettoyer un filtre à plaque, **caractérisé en ce que** le filtre à plaque est mis en oscillation dans le plan de la plaque et dans la direction perpendiculaire à l'étendue longitudinale des lamelles de l'agencement filtrant (16).

7. Procédé selon l'une quelconque des revendications 1 à 5 pour nettoyer un filtre à tuyau, **caractérisé en ce que** le filtre à tuyau est mis en oscillation dans la direction de son axe longitudinal.

8. Procédé selon l'une quelconque des revendications 1 à 5 pour nettoyer un filtre à tuyau, **caractérisé en ce que** le filtre à tuyau est mis en oscillation dans la direction perpendiculaire à son axe longitudinal.
